# EUROPEAN PATENT APPLICATION

(11) **EP 4 541 959 A1**
(43) Date of publication of application: **23.04.2025**
(21) Application number: 23823144.3
(22) Date of filing: 13.06.2023
(51) Int. Cl.: D06C 7/02, F26B 23/00, F28D 7/02, F28F 9/02, F28F 9/26

(54) **EFFICIENT WASTE HEAT RECOVERY SETTING MACHINE**

(30) Priority: 15.06.2022 CN 202210672436
(71) Applicant: Shaoxing Yongfeng Energy Saving Technology Co., Ltd, Shaoxing, Zhejiang 312030 (CN)
(72) Inventor: LAO, Guanming, Shaoxing, Zhejiang 312030 (CN)
(74) Representative: Siecker, Eric Johannes
(86) International application number: PCT/CN2023/099935
(87) International publication number: WO 2023/241576

(57) **Abstract**

A high-efficiency waste heat recovery sizing machine includes an oven body composed of a number of ovens arranged sequentially from front to back, with an exhaust air outlet on the oven, wherein the machine compries a number of heat recoverers connected in series or in parallel,a first N section of the oven body is equipped with air inlet preheating section, a remaining oven from front to back is divided into a number of stereotypes section connected, each stereotypes section contains 1 section to a number of sections of the oven, each oven body on the stereotypes section of the oven's air exhaust port is connected and corresponded to a heat recoverers, the exhaust air discharged from the ovens of the stereotypes section goes into the corresponding heat recoverers for heat exchange.

## Description

### CROSS-REFERENCE TO RELATED APPLICATIONS

This application claims priority to Chinese Patent Application No. 202210672436.X, filed on June 15, 2022, the content of which is incorporated herein by reference in its entirety.

### TECHNICAL FIELD

The present disclosure relates to the technical field of sizing machine equipment, particularly to an efficient waste heat recovery machine.

### BACKGROUND

Sizing machine is an important equipment for finishing textile printing and dyeing, it can improve the handfeel, slip, color, width, strength, appearance, applied to all kinds of textile varieties, can play a role in stabilizing the size of the fabric after finishing by the sizing machine, the sizing machine is also the main energy-consuming equipment in the textile printing and dyeing industry, it is the use of hot air to dry and finish the textile and make it a stereotypical device, existing sizing machine is mainly composed of oven body and conveying cloth roll device, in which the oven body is composed of a number of sections of the oven from the front to the back, each section of the oven is equipped with a relatively independent hot air circulating device, heating device, exhaust ducts and supplemental air inlet, due to the textile in the sizing machine before entering the oven body with moisture, and contains in the weaving process of the remaining dyeing and printing auxiliaries and other additives, and the temperature of the hot air in the oven body of sizing machine is generally 200 °C or so, so the textile through the stenter oven body, the high temperature baking produced by the exhaust air contains a large number of water vapor, high temperature evaporation of dyes and auxiliaries of organic matter, vaporized solvents, but also with the textile of the fine hair fiber and other mechanical impurities, the exhaust air is still retained in the about 170 °C about the higher temperature, the exhaust air, such as direct reuse of impurities contained in the fabric will make the fabric contamination, now, the heat is usually recovered and reused through heat exchanger, while the cold air of the existing sizing machine usually enters into the oven after only one heat exchange and warming up, and then enters into the stereotypes section of the oven, which makes it difficult to fully and effectively recover the heat of the exhaust air according to the actual situation on the one hand, and on the other hand, there is a big temperature difference between the warmed up cold air and the temperature in the stereotypes section, which is not conducive to the stabilization of the temperature, and thus affects the effect of the sizing.

### SUMMARY

A high-efficiency waste heat recovery sizing machine is provided, the cold air can be according to the actual needs of one or more heat exchange to recover the heat of the exhaust air and as the pre-setting sizing machine hot air use, in reducing the waste of heat emissions at the same time conducive to the stabilization of the temperature.

The high-efficiency waste heat recovery sizing machine is provided with an oven body composed of a number of ovens arranged sequentially from front to back, with an exhaust air outlet on the oven, the machine includes a number of heat recoverers connected in series or in parallel,a first N section of the oven body is equipped with air inlet preheating section, a remaining oven from front to back is divided into a number of stereotypes section connected, each stereotypes section contains 1 section to a number of sections of the oven, each oven body on the stereotypes section of the oven's air exhaust port is connected and corresponded to a heat recoverers, the exhaust air discharged from the ovens of the stereotypes section goes into the corresponding heat recoverers for heat exchange, each oven body on the preheating section of the oven's air exhaust port is connected and corresponded to a heat recoverers, the exhaust air discharged from the ovens of the preheating section goes into the corresponding heat recoverers for heat exchange, outside air is warmed up and entered into the oven on the preheating section after heat exchange by one or more heat recoverers.

Further, a removable filter screen is mounted at the exhaust air outlet of each oven section.

Further, the heat recoverer includes a base and a number of heat exchangers mounted on the base, the heat exchangers includes an external shell and a plurality of heat exchanger tubes mounted vertically inside the shell, and the base provides a passageway which connecting the heat exchanger.

Further, the heat exchanger is installed in the shell with a set of uniformly distributed tube plate with tube holes, a plurality of heat exchanger tubes are installed between the two tube plates, respectively connected to corresponding tube holes, part or all of the heat exchanger tubes are thin metal tubes with a wall thickness of not more than 1 mm, the thin metal tube is inserted at both ends with a connecting sleeve,both ends of the thin metal tubes are inserted with connecting sleeves, and the connecting sleeves at both ends are welded or fixed to the corresponding holes of the corresponding tube plates by means of an expander.

Further, part of the heat exchanger tube is a thick metal tube with a wall thickness of not less than 1.5mm, and both ends of the thick metal tube are welded or fixed to the corresponding tube holes of the corresponding tube plate by means of an expander to be used as a support between the tube plates.

Further, the connecting sleeve is fixed on the tube plate, and then connecting the thin metal tube located on the inner side of the tube plate, and the thin metal tube is socketed inside or outside the tube.

Further, the connecting surface of the connecting sleeve and the thin metal tube insertion is a guiding cone surface.

Further, the other end of the connecting sleeve includess a convex edge, and when the connecting sleeve is inserted into the tube hole of the tube plate, the convex edge stops with the outer side of the tube plate.

Further, the heat exchanger tube is a spiral tube with extruded inner and outer walls, and both ends of the spiral tube are connected without spiral extrusion.

Further, the machine includess a lift frame which can be lifted, the heat recoverer includes waste heat inlet, waste heat outlet, cold air inlet and hot air outlet, the lift frame is connected to a ventilating pipe which is connected to the waste heat inlet, waste heat outlet, cold air inlet and hot air outlet, and the ventilating pipe includess a soft connecting section.

Further, an isolation device is provided betweenthe the preheating section and the stereotypes section, and the isolation device separates the remaining space above and below the oven except for fabric.

According to the high-efficiency waste heat recoverer sizing machine, the exhaust air of the oven in the preheating section is discharged after heat exchange and cooling by the corresponding heat recoverers, which is connected in series or in parallel with the heat recoverers and the air inlet of the oven in the preheating section, so that the outside air is warmed up by heat exchange and enters into the oven of the preheating section after heat exchange by one or more heat recoverers according to the practical needs for the preheating air to replace the heating device, the temperature difference with the preheating section is also smaller, which can be utilized efficiently and flexibly while keeping the temperature stable.

### BRIEF DESCRIPTION OF THE DRAWINGS

FIG. 1 is a schematic diagram of a first connection according to some embodiments.
FIG. 2 is a schematic diagram of a second connection according to some embodiments.
FIG. 3 is a schematic diagram of a third connection according to some embodiments.
FIG. 4 is a schematic diagram of the structure of the first heat exchanger body and the second heat exchanger body;
FIG. 5 is a schematic diagram of the structure of the heat exchanger body;
FIG. 6 is an enlarged view at B of FIG. 5;
FIG. 7 is a schematic diagram of the heat exchanger tube socketed with the connecting sleeve outside;
FIG. 8 is a schematic diagram of the heat exchanger tube socketed with the connecting sleeve inside;
FIG. 9 is a first schematic diagram of a connecting sleeve;
FIG. 10 is a second schematic diagram of a connecting sleeve;
FIG. 11 is a schematic diagram of a third type of connecting sleeve.

### DETAILED DESCRIPTION OF THE EMBODIMENTS

### Embodiment 1

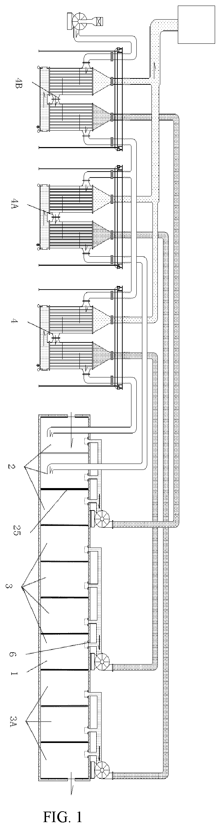

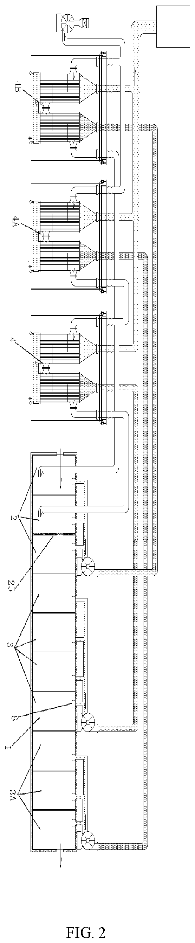

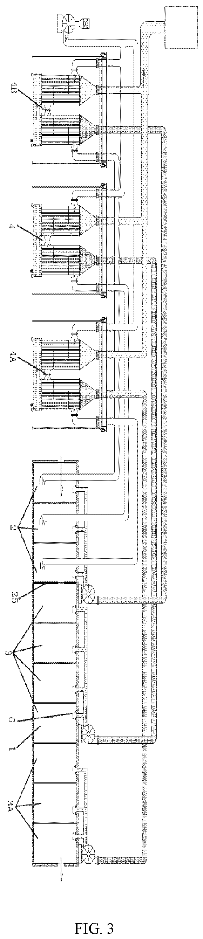

A high-efficiency waste heat recovery sizing machine, as shown in FIGS. 1 to 3, including a oven body consisting of multiple sections of the oven from front to back in order, the present embodiment is 10 sections of the oven, the oven 1 is equipped with an exhaust port, the oven body of the first 1-3 sections of the oven 1 for the preheating section 2 is equipped with an air intake port, the first 4-7 sections of the oven and the first 8-10 sections of the oven for the connection of the two sections of stereotypes section 3, 3A, the stereotypes section 3, 3A is equipped with a heating device in the oven, the heat device is a conventional radiator or burner for sizing machines, the exhaust port of the oven on the stereotypes section 3 is connected and connected to a heat recoverer 4, stereotypes section 3 on the oven exhaust air through the heat recoverer 4 heat exchanger to cool down and then discharged, stereotypes section 3A on the oven's exhaust port connected and connected to the heat recoverer 4A, stereotypes section 3A on the oven exhaust air by heat recoverer 4A heat exchange to cool down and then discharged. The exhaust air outlet of the oven in the preheating section 2 is connected and connected with heat recoverer 4B, and the exhaust air from the oven in the preheating section 2 is cooled down by heat recoverer 4B and then discharged, the heat recoverer 4B is connected in series or in parallel with heat recoverer 4 and 4A and connected with the air intake outlet of the oven in the preheating section 2. According to the actual needs of the outside air can be through the heat recoverer 4, 4A, 4B one of the heat exchanger warming, or through two of them by two heat exchanger warming into the preheating section 2 for the preheating air to be used as a substitute for the heating device, into the preheating section 2 in front of the oven hot air temperature is lower than that of the back of the oven hot air temperature, so that the preheating section 2 oven gradually warmed up, the specific connection can be as shown in FIG. 1, the outside air can be through the heat recoverer 4B once heat exchanger and then through the heat recoverer 4 or the heat recoverer 4A secondary heat exchanger and then respectively into the preheating section 2 of the first two sections of the oven; as shown in FIG. 2, the outside air through the heat recoverer 4B once heat exchanger into the preheating section 2 of the first section of the oven, through the heat recoverer 4 and then through the heat recoverer 4A twice heat exchanger into the preheating section 2 of the first section of the oven; as shown in FIG. 3, the outside air through the heat recoverer 4B once heat exchanger into the preheating section 2 of the first section of the oven, after heat recoverer 4 into the preheating section 2 of the second section of the oven, after heat recoverer 4A heat exchanger into the preheating section 2 of the third section of the oven, due to the hot air temperature in the stereotypes section 3, 3A in the hot air temperature is generally in the 200 °C, while in the preheating section 2 of the hot air temperature will be lower than 200 °C, the outside air is warmed up by heat exchange and into the preheating section 2 at a lower temperature, which facilitates temperature stabilization. The temperature with the heat recoverer 4B heat exchanged with the outside air temperature will be lower than the heat exchanged with the heat recoverer 4, 4A outside air temperature, according to this feature of the heat recoverer 4B and heat recoverer 4, 4A in series, parallel connection, so as to enter the preheating section 2 in front of the oven of the hot air temperature is lower than that of the back of the hot air into the oven temperature, to reduce the waste of heat emissions at the same time, can be utilized efficiently and flexibly. In addition, in order to reduce the heat loss of the pipeline, by minimizing the length of the distance between the connecting exhaust pipe and the heating pipe, the heat recoverer device 4, 4A, 4B is set above or next to the corresponding stereotypes section3, 3A and preheating section 2.

Further, a removable filter screen 6 is installed at the exhaust air outlet of each section of the oven 1 to provide preliminary filtration of the exhaust air and reduce the risk of clogging of the heat exchanger.

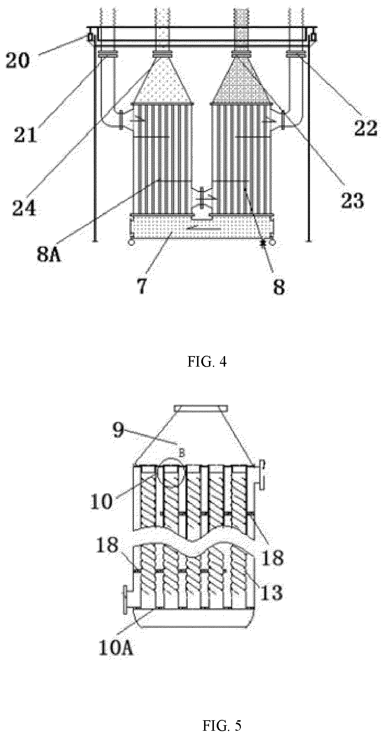

Further, As shown in FIGS. 4 to 6, the heat recoverer 4, 4A, 4B includes a base 7 and a number of heat exchanger 8, 8A mounted on the base 7, the heat exchanger 8, 8A is two in this implementation, the heat exchanger 8, 8A include the external shell 9 and a number of heat exchanger tubes installed vertically inside the shell 9, there is a channel inside the base 7 connecting the heat exchanger tubes of two heat exchanger tubes 8, there is a valve and a maintenance port on the base 7, when in use, the high temperature exhaust air enters the channel in the base 7 after the heat exchanger tubes of the heat exchanger 8A and then discharges from the other heat exchanger tubes. The outside air in the shell 9 and the heat exchanger tube in the high temperature exhaust air heat exchange from the heat exchanger 8A heat exchanger into the heat exchanger 8 to warm up the preheating section 2 of the oven body, heat exchanger tube is set up vertically, the condensate in the exhaust air after the temperature reduction, the dyestuff and the auxiliary organic matter will flow along the heat exchanger into the channel of the base 7,the condensate can be discharged through the valve, in order to prevent the heat exchanger from clogging, can be regularly cleaned up through the maintenance port of other impurities accumulated.

Further, shell 9 is installed with a set of evenly distributed with tube holes in the tube plate 10, 10A, heat exchanger tube installed in the tube plate 10, 10A, and connected to the corresponding tube holes respectively,the heat exchanger tube used in this embodimentfor the wall thickness is not greater than 1 mm of thin metal tube 13, thin metal tube 13 wall thickness of 0.2 mm to 0.5 mm is appropriate, can be used stainless steel, copper, aluminum, titanium and other materials made of stainless steel material wall thickness of 0.35 mm best, both ends of the thin metal tube 13 are inserted with a connecting sleeve 14, both ends of the connection sleeve 14 welded or through the expander expansion fixed in the tube plate 10, 10A corresponding holes, the use of metal thin tube 13 has a lower material cost, while increasing the unit cross-sectional area of the heat transfer area, enhancing the efficiency of the heat transfer, the thin metal tubes 13 are not directly welded or expanded with an expander so that they do not burn through or crack because the ends are plugged into the connecting sleeve 14 that is welded or expanded with an expander to the corresponding hole in the corresponding tube plate.

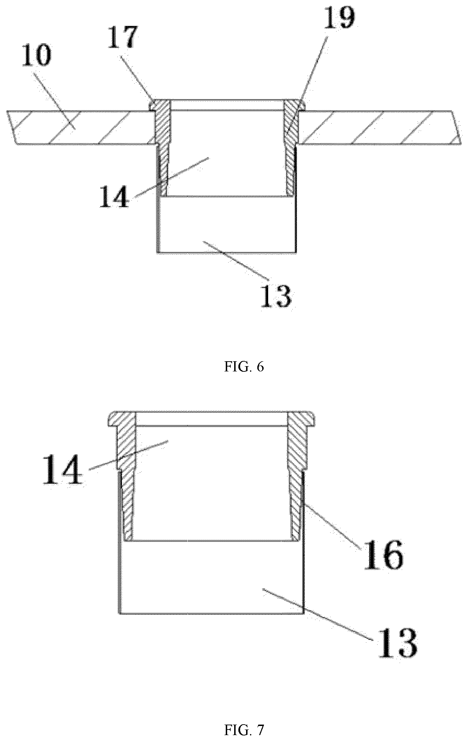

Further, as shown in FIGS. 7 to 8, the connecting sleeve 14 is fixed to the tube plate 10, 10A, and the connecting end of the thin metal tube 13 is located on the inner side of the tube plate 10, 10A, and the connecting sleeve 14 exceeds the inner side of the tube plate 10, 10A by a certain length, so that the thin metal tube 13 can be socketed inside or outside of the tube according to the need, and the connection is more flexible.

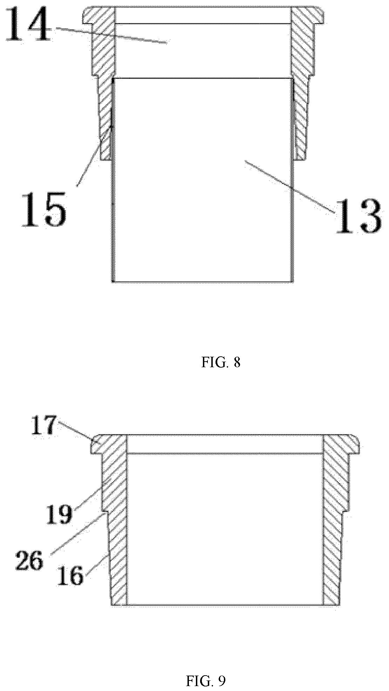

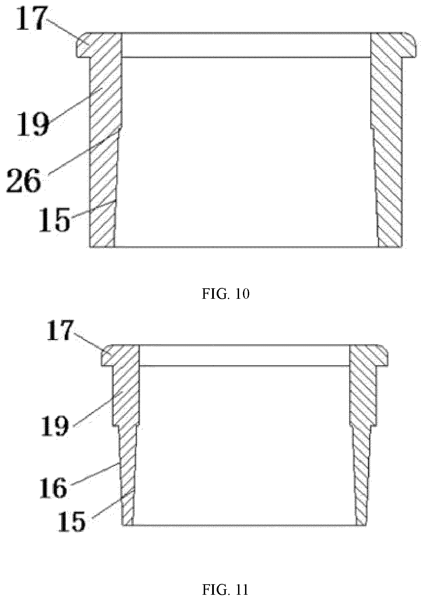

Further, connection sleeve 14 and thin metal tube 13 connecting end of the inner wall surface 15 and outer wall surface 16 are guiding cone surface, can be shown in FIG. 9, the outer wall surface 16 for the guiding cone surface; as shown in FIG. 10, the inner wall surface 15 for the guiding cone surface; as shown in FIG. 11, the inner wall surface 15 and the outer wall surface 16 for the guiding cone surface, in the tube with the thin metal tube 13 tube insertion or tube insertion to play a guiding role in the socket, convenient alignment with the connection, in the printing and dyeing industry are basically gas-gas heat transfer, do not require a high degree of sealing, so the connection sleeve 14 and the metal tube 13 can be directly inserted, of course, in order to enhance the sealing, can also be used in the two connections adhesive bonding.

Further, the other end of the connecting sleeve 14 contains a convex edge 17, the middle section of the connecting sleeve 14 is a tube hole mating section 19, and a stop 26 is formed between the tube hole mating section 19 and the guiding cone, when the connecting sleeve 14 is connected to the tube holes of the tube plates 10 and 10A through the middle tube hole mating section 19, the convex edge 17 is limited to the outer side of the tube plates 10 and 10A. The stop 26 stops the thin metal tubing at stop 13, which allows the connecting sleeve 14 to be placed at a specific location in the tube hole of the tube plate 10, 10A, facilitating precise placement of the connecting sleeve 14 for subsequent welding or expansion by means of a tube expander.

Further, thin metal tube 13 for the inner wall and outer wall are extruded spiral tube; tube wall through the extrusion to form a spiral, spiral tube at both ends of the spiral extrusion of the connection end, easy to connect with the connecting sleeve 14 or with the tube plate 10, 10A tube holes, tightly connected to the use of spiral tube on the one hand, to enhance the heat exchange area, on the other hand, the medium will be caused by the passage of the perturbation, resulting in a rotating circulation, and to further increase the tube inside and outside of the two kinds of media heat exchange efficiency.

Further, shell 9 is installed in a number of thin metal tube 13 between the spacer 18, a number of spacer 18 is located in the thin metal tube 13 outside of the medium guided serpentine transport, extend the medium in the heat exchanger heat exchange distance and time, improve the heat exchange efficiency, while the spacer 18 is also on the heat exchanger tube to play the effect of reinforcing, in particular, because of the thin tube wall of the thin metal tube 13 is easy to be deformed, through the spacer 18 reinforcing, increase the deformation resistance.

Further, the lift frame 20 can be lifted, including the base 7 and a number of heat exchanger 8, 8A heat recovery 4B or heat recovery 4, 4A are installed on the base 7 are equipped with cold air inlet 21, cold air outlet 22, hot air inlet 23, hot air outlet 24, cold air inlet 21, cold air outlet 22, hot air inlet 23, hot air outlet 24 are softly connected to the ventilation pipeline, the ventilation pipeline is mounted on the lifting frame 20, through the lifting frame 20 lifting, the ventilation pipeline can be moved up and down to facilitate with the heat recycler 4B or heat recycler 4, 4A dismantling, easy to replace the heat recycler 4B or heat recycler 4, 4A for cleaning.

Further, the lifting frame 20, heat recovery 4, 4A, 4B contains waste heat inlet 23, waste heat outlet 24, cold air inlet 21, hot air outlet 22, lifting frame 20 is connected to the waste heat inlet 23, waste heat outlet 24, cold air inlet 21, hot air outlet 22 with the ventilation pipe connected to the ventilation pipe contains a soft connection section, the exhaust air from the waste heat inlet 23 to enter the heat exchanger cooling down from the waste heat outlet 24 discharge, outside air from the cold air inlet 21 to enter the heat exchanger cooling down from the hot air outlet 22 into the preheating section 2 oven,the waste heat inlet 23, the waste heat outlet 24, the cold air inlet 21, the hot air outlet 22 ports and the corresponding end of the ventilation pipe with the joints set up to match the lifting frame 20 lifting, the ventilation pipe with the soft connection section can be extended and retracted to connect and remove the waste heat inlet 23, waste heat outlet 24, cold air inlet 21 and hot air outlet 22, which is convenient to disassemble the heat recovery units 4, 4A and 4B for replacement and cleaning.

As shown in FIG. 3, between the preheating section 2 and its neighboring sizing section 3 or between the ovens adjacent to the preheating section 2, an isolation device 25 is provided, and the isolation device 25 separates the rest of the space above and below the ovens except for the fabric, because the temperature of the sizing section 3 and 3A is high, and the temperature inside the preheating section 2 is relatively low, and the heat from the sizing section 3 and 3A flows to the preheating section 2 by the isolation device 25, in order to increase the efficiency of the sizing.

### Embodiment 2

The difference between embodiment 1 and embodiment 2 is that the heat exchanger tube of the heat exchanger , part of the heat exchanger tube is a thick metal tube with a wall thickness of not less than 1 .5 mm, which is welded directly at both ends or fixed to the corresponding tube holes of the tube plate 10, 10A by means of an expander expansion, and the number of heat exchanger tubes in the heat exchanger usually reaches dozens or even hundreds of tubes, which makes the tube plate 10, 10A full of tube holes, and the tube plate 10, 10A will deform due to insufficient strength if it does not have the support for the tube plate 10, 10A. If the heat exchanger tubes used are all thin metal tubes13 which are only inserted with the connecting sleeve 14 and installed between the tube plates 10 and 10A and their own strength is not enough, they cannot play the role of support, by using part of the heat exchanger tube with a wall thickness of less than 1.5 mm, and the metal thick tube is fixed to the tube plate 10, 10A of the corresponding tube holes through the expansion of the metal thick tube by the tube expander, can play a role in supporting the tube plate 10, 10A so that it will not be deformed for the purpose, the number of thick metal tubes do not need to be more and according to the actual needs of the number of choices and the location of the connection, such as heat exchanger tubes for a total of 100, 4 metal thick tube can be used, 96 thin metal tube 3, 4 thick metal tubes are mounted on the tube plate 10, 10A of the four corners of the structure , the rest of the structure is the same as embodiment 1, and will not be repeated.

The above contents are described in further detail with reference to specific embodiments, and the practical implementation of the present disclosure is not limited to these descriptions, and for those of ordinary skill in the technical field of the present disclosure, several simple deduction or substitutions may be made without departing from the concept of the present disclosure, and should be regarded as the protection scope determined by the claims filed in the present disclosure.

## Claims

1. A high-efficiency waste heat recovery sizing machine, comprising an oven body composed of a number of ovens arranged sequentially from front to back, with an exhaust air outlet on the oven, wherein the machine compries a number of heat recoverers connected in series or in parallel,a first N section of the oven body is equipped with air inlet preheating section, a remaining oven from front to back is divided into a number of stereotypes section connected, each stereotypes section contains 1 section to a number of sections of the oven, each oven body on the stereotypes section of the oven's air exhaust port is connected and corresponded to a heat recoverers, the exhaust air discharged from the ovens of the stereotypes section goes into the corresponding heat recoverers for heat exchange, each oven body on the preheating section of the oven's air exhaust port is connected and corresponded to a heat recoverers, the exhaust air discharged from the ovens of the preheating section goes into the corresponding heat recoverers for heat exchange, outside air is warmed up and entered into the oven on the preheating section after heat exchange by one or more heat recoverers.

2. The machine according to claim 1, wherein the heat recoverer comprises a base and a number of heat exchangers mounted on the base, the heat exchanger comprises an external shell and a heat exchanger tubes mounted vertically inside the shell, and the base provides a passageway which connecting the heat exchanger.

3. The machine according to claim 2, wherein the heat exchanger is installed in the shell with a uniformly distributed tube plate with a tube hole, a plurality of heat exchanger tubes are installed between the two tube plates, respectively connected to corresponding tube holes , part or all of the heat exchanger tubes are thin metal tubes with a wall thickness of not more than 1 mm, both ends of the thin metal tubes are inserted with connecting sleeves, and the connecting sleeves at both ends are welded or fixed to the corresponding holes of the corresponding tube plates by means of an expander.

4. The machine according to claim 3, wherein part of the heat exchanger tube is a thick metal tube with a wall thickness of not less than 1.5mm, and both ends of the thick metal tube are welded or fixed to the corresponding tube holes of the corresponding tube plate by means of an expander to be used as a support between the tube plates.

5. The machine according to claim 3 or 4, wherein the connecting sleeve is fixed on the tube plate, and then connecting the thin metal tube located on the inner side of the tube plate, and the thin metal tube is socketed inside or outside the tube.

6. The machine according to claim 5, wherein the connecting surface of the connecting sleeve and the thin metal tube insertion is a guiding cone surface.

7. The machine according to claim 5, wherein the other end of the connecting sleeve comprises a convex edge, and when the connecting sleeve is inserted into the tube hole of the tube plate, the convex edge stops with the outer side of the tube plate.

8. The machine according to claim 3 or 4, wherein the heat exchanger tube is a spiral tube with extruded inner and outer walls, and both ends of the spiral tube are connected without spiral extrusion.

9. The machine according to claim 2, wherein the machine comprises a lift frame which can be lifted, the heat recoverer comprises a waste heat inlet, a waste heat outlet, a cold air inlet and a hot air outlet, the lift frame is connected to a ventilating pipe which is connected to the waste heat inlet, waste heat outlet, cold air inlet and hot air outlet, and the ventilating pipe comprises a soft connecting section.

10. The machine according to claim 1, wherein an isolation device is provided between the the preheating section and the stereotypes section, and the isolation device separates the remaining space above and below the oven except for fabric.
